(19) Europäisches Patentamt
European Patent Office
Office européen des brevets

(11) Numéro de publication : **0 532 396 A1**

(12) **DEMANDE DE BREVET EUROPEEN**

(21) Numéro de dépôt : **92402427.6**

(51) Int. Cl.$^5$ : **C01B 21/098**

(22) Date de dépôt : **04.09.92**

(30) Priorité : **11.09.91 FR 9111225**

(43) Date de publication de la demande :
**17.03.93 Bulletin 93/11**

(84) Etats contractants désignés :
**AT BE CH DE DK ES FR GB GR IE IT LI LU NL PT SE**

(71) Demandeur : **ELF ATOCHEM S.A.**
**4 & 8, Cours Michelet La Défense 10**
**F-92800 Puteaux (FR)**

(72) Inventeur : **Bordere, Serge**
**Rue Principale, Cidex 63**
**F-64230 Poey de Lescar (FR)**
Inventeur : **Potin, Philippe**
**9 rue des Paquerettes**
**F-64140 Billere (FR)**
Inventeur : **Schneider, Rodolphe**
**108 Avenue de Paris**
**F-78000 Versailles (FR)**

(54) **Procédé de préparation de polydichlorophosphazènes à partir d'une composition précurseur à base d'hexachlorocyclotriphosphazène.**

(57) L'invention a pour objet un procédé de préparation de polydichlorophosphazènes.
Ce procédé consiste à chauffer une composition précurseur à base d'hexachlorocyclotriphosphazène avec de l'oxychlorure de phosphore puis à éliminer de façon contrôlée l'oxychlorure de phosphore introduit.

EP 0 532 396 A1

La présente invention a pour objet un procédé de préparation des polydichlorophosphazènes et des polyorganophosphazènes en dérivant.

Les polyorganophosphazènes représentent une vaste famille de polymères qui sont tous constitués d'un squelette formé d'un enchaînement -N=P- qui comporte des groupements organiques de natures variées, tels que des groupements alcoxy, aryloxy, sulfure, amino etc.. Cette diversité de structure confère aux polyphosphazènes un champ d'applications potentielles particulièrement large, parmi lesquelles on peut citer, entre autres, les mousses ignifuges d'isolation ou de coussinage, les revêtements ignifuges, les élastomères spéciaux, les polymères conducteurs, les applications biomédicales, les membranes de séparation.

L'ensemble de ces polyphosphazènes ne peut être préparé à une échelle industrielle qu'à partie d'un intermédiaire commun qui est le polydichlorophosphazène. Le passage de cet intermédiaire à un polyorganophosphazène se fait en substituant les chlores par un réactif organique, selon la réaction suivante :

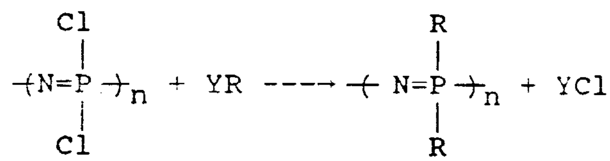

où R est un groupement organique quelconque, en particulier ceux cités précédemment et Y un métal en général alcalin ou un hydrogène.

Quel que soit le mode de substitution il est nécessaire de disposer d'un polydichlorophosphazène dont la masse moléculaire soit adaptée à l'application recherchée.

Il faut donc pouvoir maîtriser le niveau de cette masse moléculaire.

Plusieurs voies ont été décrites pour la préparation du polydichlorophosphazène.

Ainsi, Allcock et Kugel (Brevet US 3 370 020) ont proposé de chauffer l'hexachloro-2,2,4,4,6,6 cyclophosphazatriène-1,3,5- que l'on désignera par la suite hexachlorocyclotriphosphazène- jusqu'à ce qu'environ 50 % de ce précurseur soit transformé en polymère.

De cette façon, le polydichlorophosphazène ne contient qu'une faible teneur en gel réticulé. Il se présente essentiellement sous une forme linéaire, donc soluble, ce qui permet de le transformer par substitution.

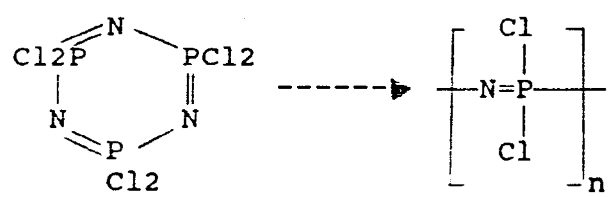

Ce procédé présente l'inconvénient de ne pas permettre d'arrêter la croissance des chaînes au niveau désiré et ainsi les masses moléculaires atteintes sont aléatoires et en général très élevées. D'autre part, il nécessite la séparation, après la polymérisation, du trimère et du polydichlorophosphazène.

Allcock et Gurdner (Brevet US 3 917 802) ont proposé un procédé qui permet de réduire la masse moléculaire du polydichlorophosphazène. Le procédé consiste à chauffer ce polymère en présence de pentachlorure de phosphore ce qui entraîne des ruptures de liaisons P-N des chaînes.

Ce procédé présente l'inconvénient de mettre en oeuvre un réactif qui est très corrosif et dont la manipulation et délicate, car il se présente sous forme de blocs solides.

Plus récemment, De Jaeger, Pagniez et Potin (demande de brevet Européen N°424 235) ont proposé un procédé de régulation de la masse moléculaire, par réduction de la longueur des chaînes du polydichlorophosphazène. Ce procédé consiste à effectuer des coupures de chaînes sous l'action de l'oxychlorure de phosphore.

Le procédé qui fait l'objet de la présente invention permet de transformer une composition précurseur à base d'hexachlorocyclotriphosphazène en polydichlorophosphazène jusqu'à une conversion complète, sans aucune formation de réticulation et en ayant la possibilité d'arrêter la polymérisation au niveau de masse moléculaire souhaité.

Par l'expression "composition précurseur à base d'hexachlo-rocyclotriphosphazène" ou plus brièvement "composition précurseur", on désigne dans la présente description l'hexachlorocyclotriphosphazène seul ou en mélange avec l'octachlorocyclotétraphosphazène et/ou avec des oligomères cycliques supérieurs $(NPCl_2)_n$ avec n compris entre 5 et 10 et éventuellement avec des oligomères linéaires de formule $(NPCl_2)_n$ $PCl_5$ avec

n compris entre 3 et 10.

La composition précurseur à base d'hexachlorocyclotriphosphazène contient au moins 70 % en poids d'hexachlorocyclotriphosphazène.

Le procédé selon l'invention consiste à chauffer la composition précurseur en présence d'oxychlorure de phosphore puis à distiller ledit oxychlorure de phosphore introduit.

On observe que lorsque l'on chauffe la composition précurseur en présence d'une quantité suffisante d'oxychlorure de phosphore, il se produit une ouverture des cycles conduisant à la formation d'oligomères linéaires (I) dont une extrémité est terminée par la fonction $-N=PCl_3$ et l'autre extrémité par la fonction $-P(0)Cl_2$ :

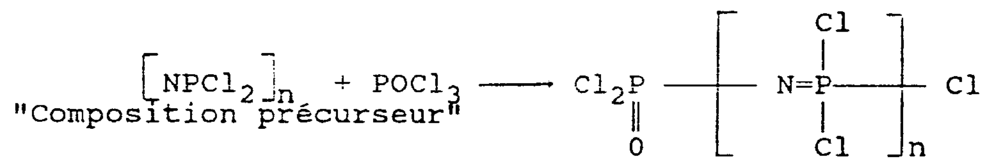


(I)

n étant compris entre 3 et 10.

A ce stade on a trouvé qu'il était possible de faire croître la masse moléculaire en chauffant les dits oligomères linéaires (I).

On obtient des polydichlorophosphazènes linéaires (II) avec x qui peut être compris entre 1 et 5 000 voire d'avantage et formation d'oxychlorure de phosphore :

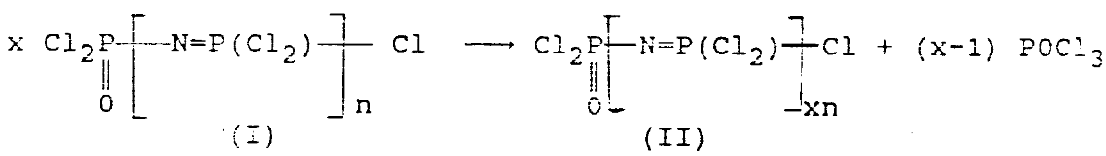

(I) (II)

Cette transformation qui s'effectue par une croissance des chaînes avec libération contrôlée d'oxychlorure de phosphore est une réaction de polycondensation qui s'apparente à celle déjà décrite dans le brevet FR 2 466 435 pour la préparation de polydichlorophosphazène par polycondensation du P-trichloro N-dichlorophosphoryl monosphazène.

Selon la présente invention, la conversion peut être conduite à son terme sans aucune formation de polymère réticulé. Par ailleurs, l'évolution de la masse moléculaire croit régulièrement en fonction de la durée de réaction de polycondensation et de la température, ce qui permet par un simple suivi analytique d'arrêter la réaction au niveau de masse moléculaire souhaité.

A cette effet on pourra par exemple faire à des temps variables des prélèvements et effectuer sur es dits prélèvements des mesures de viscosités intrinsèque $[\eta]$ à partir de laquelle on peut obtenir la masse moléculaire en poids Mw selon une loi préétablie.

Ce procédé s'applique tout particulièrement à la préparation de polydichlorophosphazène à partir d'une composition précurseur constituée essentiellement d'hexachlorocyclotri-phosphazène.

Les quantités d'oxychlorure de phosphore à engager par rapport aux quantités de composition précurseur peuvent varier dans une large mesure et être sans inconvénient très supérieures à 1 mole par mole de composition précurseur, l'excès introduit permettant d'accroître la vitesse de réaction.

La réaction d'ouverture de cycle peut être effectuée avec une quantité inférieure d'une mole par mole de composition précurseur. Le complément de conversion pouvant être amené par l'oxychlorure de phosphore résultant de la polycondensation elle-même.

Le rapport du nombre de moles d'oxychlorure de phosphore au nombre de moles de la composition précurseur est au plus égal à 100, généralement compris entre 0,1 et 50 et préférence compris entre 1 et 4.

La température à laquelle cette réaction d'ouverture de cycle peut être effectuée peut être comprise entre 200°C et 350°C et de préférence entre 250°C et 300°C.

La durée de la réaction d'ouverture de cycle est fonction de la température et de la quantité molaire d'oxychlorure de phosphore introduite et peut par conséquent varier dans une large mesure.

Pour des quantités molaires d'oxychlorure de phosphore égales ou supérieures à une mole par mole de composition précurseur et une température comprise entre 250°C et 300°C, la durée d'ouverture de cycle est en général au plus égal à 15 heures et habituellement comprise entre 5 et 10 heures.

La polycondensation des oligomères linéaires de formule (I) obtenus selon la présente invention par chauffage d'une composition précurseur en présence d'oxychlorure de phosphore peut être réalisée avantageusement dans l'appareillage ayant servi à la préparation de ces dits oligomères mais on ne sortirait pas du cadre de l'invention si on utilisait un autre dispositif pour réaliser ladite polycondensation.

Selon le niveau de masse moléculaire souhaité on peut opérer en masse ou en solution.

Si l'on désire obtenir des masses moléculaires de l'ordre de 100 000 on opèrera avantageusement en masse, dans un réacteur muni d'une agitation courante telle qu'une agitation à ancre. Pour les conditions réactionnelles, on pourra se reporter avantageusement au brevet français N° 2 466 435 dont le contenu est incorporé ici par référence.

Si l'on désire poursuivre la polycondensation pour obtenir des masses moléculaires plus élevées, la viscosité du milieu devient très élevée et on observe généralement une réticulation rapide du polycondensat. Afin de remédier à cet inconvénient, on peut utiliser une agitation spécialement adaptée à ce type de polycondensat comme celle décrite dans la demande française N° 89 06565.

Selon une autre modalité d'exécution du procédé et lorsqu'on souhaite obtenir de hautes masses moléculaires on opère en milieu solvant.

A cette fin, on peut introduire le solvant au début des opérations, c'est à dire en même temps que l'oxychlorure de phosphore destiné à l'ouverture de cycle, ou lorsque l'essentiel de l'élimination de l'oxychlorure de phosphore a été effectué, ou bien également juste après l'étape d'ouverture de cycle de la composition précurseur.

Les solvants choisis doivent être inertes vis à vis des constituants de la réaction. Ils sont avantageusement de grande pureté et préalablement déshydratés.

Comme solvants inertes utilisables dans le procédé selon l'invention, on peut citer à titre non limitatif les hydrocarbures aromatiques tels que le benzène, le naphtalène, le diphényle, le diphényléther ; les hydrocarbures aromatiques halogénés tels que le chlorobenzène, les dichlorobenzènes, les trichlorobenzènes, le tétrachlorobenzène, le pentachlorobenzène, l'hexachlorobenzène, les chloronaphtalènes et les chlorodiphényles.

Le rapport massique solvant/composition précurseur doit être réglé de façon à abaisser suffisamment la viscosité du mélange réactionnel pour le rendre agitable et éviter toute réticulation.

Ce rapport est en général au plus égal à 10 et de préférence compris entre 1 et 3.

La température de polycondensation des oligomères linéaires peut être égale ou différente de la température à laquelle la composition précurseur est chauffée en présence de l'oxychlorure de phosphore.

Cette température de polycondensation est au plus égale à 305°C et de préférence comprise entre 200°C et 300°C.

Tout ou partie du procédé selon la présente invention peut être réalisé sous gaz inerte tel que l'azote, sous pression réduite et/ou sous une pression qui peut atteindre 50 bars voire d'avantage mais est de préférence comprise entre la pression atmosphérique et 30 bars.

L'exemple suivant illustre l'invention.

EXEMPLE

Dans un réacteur de 4 litres permettant d'opérer sous pression et équipé d'un chauffage par fluide caloporteur, d'une agitation à ancre, d'une prise d'échantillon et d'un système de distillation, on introduit 1 090 g (3,13 moles) d'hexachlorocyclotriphosphazène et 1 644 g (10,71 moles) d'oxychlorure de phosphore ($POCl_3$).

L'ensemble est chauffé entre 100°C et 280°C pendant 4 h puis maintenu à 280°C pendant 6 h 30 mn.

A cette température la pression atteint 20,5 bars. Le milieu réactionnel est ensuite refroidi à 120°C en 1 h. A ce stade, l'analyse par RMN du $^{31}P$ donne les résultats suivants :

| | |
|---|---|
| POCl3 | 45,24 (% P) |
| Hexachlorocyclotriphosphazène | 0,64 (% P) |
| Oligomères linéaires | 54,12 (% P) |

Le $POCl_3$ est distillé par chauffage du réacteur à 160°C pendant 1 h 30 mn, puis à 280°C pendant 1 h 20 mn les dernières 20 mn de chauffage étant effectuées sous balayage d'azote.

A ce stade on introduit 2 000 g de trichloro-1,2,4 benzène préalablement chauffés à 280°C.

L'ensemble est maintenu à 280°C sous une pression de 5 bars.

L'évolution de la polycondensation est suivie par prises d'échantillons et mesures de la masse moléculaire en poids (Mw) du polydichlorophosphazène par viscosité intrinsèque [η]. La masse moléculaire en poids Mw est donnée d'après la loi de Mark Houwink suivante :

$$\log Mw = (\log [\eta] + 1,6064)/0,57496.$$

Les résultats obtenus sont donnés ci-après :

| Temps (h) | (η) ml/g | Mw |
|---|---|---|
| 7 | 18 | 95 000 |
| 20 | 46 | 485 000 |
| 27 | 56 | 683 000 |

## Revendications

1. Procédé de préparation des polydichlorophosphazènes et des polyorganophosphazènes en dérivant, caractérisé en ce qu'il consiste à chauffer une composition précurseur à base d'hexachlorocyclotriphosphazène en présence d'oxychlorure de phosphore puis à éliminer ledit oxychlorure de phosphore introduit.

2. Procédé selon la revendication 1, caractérisé en ce qu'il consiste à chauffer une composition précurseur à base d'hexachlorocyclotriphosphazène avec une quantité suffisante d'oxychlorure de phosphore pour ouvrir les cycles de la dite composition et à réaliser la polycondensation par chauffage des oligomères linéaires avec libération contrôlée d'oxychlorure de phosphore.

3. Procédé selon l'une quelconque des revendications 1 ou 2, caractérisé en ce que la composition précurseur à base d'hexachlorocyclotriphosphazène contient au moins 70 % en poids d'hexachlorocyclotriphosphazène.

4. Procédé selon l'une quelconque des revendications 1 à 3, caractérisé en ce que la composition précurseur est consitutée essentiellement d'hexachlorocyclotriphosphazène.

5. Procédé selon l'une quelconque des revendications 1 à 4, caractérisé en ce que le rapport du nombre de moles d'oxychlorure de phosphore au nombre de moles de la composition précurseur est au plus égal à 100.

6. Procédé selon la revendication 5, caractérisé en ce que le rapport du nombre de moles d'oxychlorure de phosphore au nombre de moles de la composition précurseur est compris entre 0,1 et 50 et de préférence compris entre 1 et 4.

7. Procédé selon l'une quelconque des revendications 1 à 4, caractérisé en ce que le chauffage de la composition précurseur en présence d'oxychlorure de phosphore est effectuée entre 200°C et 350°C.

8. Procédé selon la revendication 7, caractérisé en ce que la température de chauffage est comprise entre 250°C et 300°C.

9. Procédé selon l'une quelconque des revendications 1 ou 2, caractérisé en ce que le chauffage d'une composition précurseur à base d'hexachlorocyclotriphosphazène en présence d'oxychlorure de phosphore s'effectue en masse.

10. Procédé selon l'une quelconque des revendications 1 ou 2, caractérisé en ce que l'on opère en milieu solvant.

11. Procédé selon la revendication 10, caractérisé en ce que le solvant est introduit en même temps que l'oxychlorure de phosphore.

12. Procédé selon la revendication 10, caractérisé en ce que le solvant est introduit lorsque l'oxychlorure de phosphore a été quasiment éliminé.

13. Procédé selon la revendication 10, caractérisé en ce que le solvant est introduit après l'étape d'ouverture des cycles de la composition précurseur et avant l'élimination contrôlée de l'oxychlorure de phosphore.

14. Procédé selon l'une quelconque des revendication 10 à 13, caractérisé en ce que le solvant est choisi

parmi les hydrocarbures aromatiques et leurs dérivés halogénés.

**15.** Procédé selon la revendication 14, caractérisé en ce que le solvant est le trichloro-1,2,4 benzène.

**16.** Procédé selon la revendication 10, caractérisé en ce que le rapport massique solvant/composition précurseur est au plus égal à 10.

**17.** Procédé selon la revendication 16, caractérisé en ce que le rapport massique est compris entre 1 et 3.

**18.** Polydichlorophosphazènes tels qu'obtenus par application du procédé selon l'une quelconque des revendications 1 à 17.

**19.** Polyorganophosphazènes obtenus par substitution par des groupements organiques de tout ou partie des atomes de chlore des polydichlorophosphazènes de la revendication 18.

Office européen des brevets

# RAPPORT DE RECHERCHE EUROPEENNE

Numero de la demande
EP 92 40 2427

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 046 584 (THE FIRESTONE TIRE RUBBER COMPANY)<br>* revendication 4 *<br>--- | 1 | C01B21/098 |
| A | EP-A-0 177 370 (ETHYL CORP.)<br>* exemple 1 *<br>--- | 1 | |
| A | DE-A-2 754 245 (ARMSTRONG CORK CO)<br>* revendications 1,6 *<br>--- | 1 | |
| A | DE-B-1 667 439 (CASTROL LTD.)<br>* colonne 1, ligne 25 - colonne 2, ligne 59 *<br>--- | 1 | |
| A,D | EP-A-0 424 235 (ATOCHEM)<br>* revendication 1 *<br>--- | 1 | |
| A,D | US-A-3 917 802 (ALLCOCK ET AL)<br>* revendication 1 *<br>--- | 1 | |
| A | CHEMICAL ABSTRACTS, vol. 96, no. 8, 22 Février 1982, Columbus, Ohio, US; abstract no. 52937n,<br>* abrégé *<br>& SU-A-870 406 (KIREEV , V. V. ET AL) 7 Octobre 1981<br>----- | 1 | DOMAINES TECHNIQUES RECHERCHES (Int. Cl.5 )<br>C01B |

Le présent rapport a été établi pour toutes les revendications

| Lieu de la recherche | Date d'achèvement de la recherche | Examinateur |
|---|---|---|
| BERLIN | 21 DECEMBRE 1992 | CLEMENT J-P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)